Europäisches Patentamt

European Patent Office

Office européen des brevets

(19)

(11) Publication number: **0 241 238**
**A2**

# EUROPEAN PATENT APPLICATION

(12)

(21) Application number: **87302919.3**

(22) Date of filing: **03.04.87**

(51) Int. Cl.³: **G 11 B 15/675**

(30) Priority: **07.04.86 US 849140**

(43) Date of publication of application:
**14.10.87 Bulletin 87/42**

(84) Designated Contracting States:
**DE FR GB IT SE**

(71) Applicant: **Archive Corporation**
**1650 Sunflower Avenue**
**Costa Mesa California 92626(US)**

(72) Inventor: **Kukreja, Jagmohan S.**
**585 West Redlands Avenue**
**Claremont California 91711(US)**

(72) Inventor: **Van Valkenburgh, John C.**
**15 Lindberg**
**Irvine California 92714(US)**

(72) Inventor: **Buckland, Kurt A.**
**52 Bridgeport**
**Irvine California 92714(US)**

(74) Representative: **Rushton, Ronald et al,**
**SOMMERVILLE & RUSHTON 11 Holywell Hill**
**St. Albans Hertfordshire AL1 1EZ(GB)**

(54) **Cartridge loading apparatus.**

(57) A streaming tape drive having a cartridge loading apparatus (54) which locks a tape cartridge (14) into a fully loaded position yet does not resist motion of the cartridge (14) during loading and unloading. To lock the cartridge (14) in the fully loaded position, rollers (56) nest within cut out notches (28) on the side edges (24) of the cartridge (14). The rollers (56) are rotatably mounted on carrier levers (60) which in turn are pivotably secured to the tape drive housing (12). Rotation of the carrier levers (60) in one direction causes the rollers (56) to engage the cartridge (14), whereas rotation of the carrier levers (60) in the opposite direction causes disengagement of the rollers (56). Means (74) are provided for manually rotating the carrier levers (60) so that the rollers (56) are disengaged from the cartridge (14) during loading and unloading of the cartridge (14).

Fig 2

Croydon Printing Company Ltd.

EP 0 241 238 A2

## CARTRIDGE LOADING APPARATUS
### Background of the Invention

The present invention relates generally to tape drives, and more particularly to a "streaming" tape drive which is used to store digital data on magnetic tape wound within a tape cartridge.

Many small business and personal computer systems utilize back-up memory devices in the event of a malfunction in the principal memory device of the computer. Previously, "floppy" disk drive units have been used to store data in such an event. As an alternative to floppy disk drives, "streaming" tape drives have been developed as a means for storing data on a length of 1/4" wide magnetic tape which is wound within a tape cartridge. As a back-up memory device, tape drives are preferable to floppy disk drives because tape drives have a much greater storage capacity, and can load data onto the computer much more quickly.

To facilitate industry-wide compatibility of components, floppy disk drives are designed to have overall external dimensions which allow the drive to fit in a standard size enclosure. These dimensions, also referred to as the "form factor for mechanical transport," are dictated by ANSI, an industry group. For example, a 5-1/4" form factor corresponds to a disk drive which uses 5-1/4" diameter floppy disks. Likewise, tape drives are designed to comply with the form factor dimensions so as to be interchangeable with disk drives. Standard dimensions for 1/4" tape cartridges are also specified by ANSI so that for a tape drive corresponding to a given form factor, a compatible, standard size tape cartridge will be available.

With the advent of 3-1/2" floppy disk drives, a new, smaller 3-1/2" form factor has been developed. Thus, the dimensions of a tape drive which complies with the 3-1/2" form factor are considerably smaller than the dimensions of a tape drive complying with the 5-1/4" form factor. As a result, all of the mechanical components in the tape drive must be designed to occupy as little space as possible in order for the tape drive to have the required 3-1/2" form factor dimensions.

One such mechanical component which must be scaled down is the cartridge loading mechanism. This mechanism properly positions and locks the tape cartridge in a stationary, fully loaded position within the tape drive so that a magnetic read/write head within the tape drive can engage the tape. Typically, the loading apparatus also includes an eject button, which is manually actuated to cause the tape cartridge to unload from the tape drive. For the user's convenience, it is desirable to minimize the amount of manual force which must be applied to the cartridge to load the cartridge into the tape drive, and the force applied to the eject button to unload the cartridge.

Previous cartridge loading apparatus have used rotatable rollers to guide the cartridge into place. The rollers are spring loaded and are displaced downwardly as the cartridge initially slides over the rollers. As the cartridge continues over the rollers, a pair of preformed, cut out notches on the side edges of the cartridge become aligned with the rollers. The rollers then spring back to their original position and nest within the notches, thus locking the cartridge in the fully loaded position. A disadvantage of such a cartridge loading apparatus is that the locking force of the rollers must be overcome manually each time the cartridge is loaded and unloaded.

This prior art cartridge loading apparatus is especially inappropriate for a smaller tape drive mechanism such as one designed to comply with a 3-1/2" form factor. The reason is that as the loading apparatus is made smaller, the diameter of the rollers must be reduced, and the centers of the rollers must be positioned closer to the fully loaded, locked position of the tape cartridge. As a result, a larger manual force is required to slide the cartridge over the rollers and into a fully loaded position. Likewise, a larger manual force must be applied to eject the tape cartridge. This is because the cartridge applies a force to the rollers which mainly pushes the rollers forward, thus encountering resistance, as opposed to pushing the rollers downward and away from the cartridge to enable the cartridge to easily slide over the rollers.

Thus, a need exists for an improved cartridge loading apparatus which is sufficiently compact to be utilized in combination with a 3-1/2" form factor tape drive, and which requires only a small manual force to load and unload the cartridge from the tape drive.

## Summary of the Invention

The present invention comprises a tape drive for a tape cartridge in which the cartridge is loaded and unloaded without having to overcome resistance from the apparatus which secures the cartridge in its engaged, fully loaded position.

In the preferred embodiment, the cartridge securing apparatus comprises a pair of rollers which are rotatably mounted on the housing and positioned to engage preformed notches in tape cartridge. These rollers are respectively mounted on carrier levers pivotably secured to the tape drive housing. Rotation of the carrier levers cause the rollers to move in a direction either toward or away from the cartridge, and thus causes the rollers to either engage or disengage the cartridge. The carrier levers are biased to rotate in the direction which brings the rollers into engagement with the cartridge.

A feature of this invention is that the biased carrier levers snap the rollers into engagement with notches preformed in the tape cartridge. As a result, the cartridge is pushed firmly into its loaded position and effectively locked into position within the tape drive.

The rollers are disengaged from the cartridge notches by a crank assembly also pivotably secured to the housing and adapted to pivot into contact with the roller carrier levers and rotate then in the direction which disengages the roller from the cartridge. Preferably, the crank is biased in a direction to pivot in the direction away from contact with the carrier levers.

Advantageously, leverage is applied to the carrier levers by the crank assembly, thus minimizing the manual force which must be applied to the crank assembly to disengage the rollers. Thus, the force required to disengage the roller from the cartridge is less than the force which the roller applies to lock the cartridge in a fully loaded position.

Another significant feature of the preferred embodiment of the present invention is that the rollers are automatically maintained disengaged from the cartridge as it is both being loaded and unloaded. As a result, resistance from the cartridge securing apparatus is not encountered as the cartridge is slid into and out of the tape drive. This is accomplished by an engagement mechanism which supports the carrier levers as the cartridge is being loaded and unloaded. Thus, the rollers resist movement of the cartridge only when the cartridge is fully loaded.

In a preferred embodiment of the invention, the exterior dimensions of the housing are sufficiently small so that the tape drive complies with the 3-1/2" form factor.

The present invention thus provides an improved apparatus and method for loading and unloading a tape cartridge into a tape drive. The method comprises the steps of (1) loading the cartridge into the tape drive by inserting the cartridge through an opening in the tape drive housing, (2) locking the cartridge in the fully loaded position by engaging the cartridge with a means for securing the cartridge in place, (3) disengaging the securing means to allow the cartridge to be unloaded without encountering resistance from the securing means, and (4) unloading the cartridge from the tape drive.

## Brief Description of the Drawings

Figure 1 is a front perspective view of a "streaming" tape drive according to a preferred embodiment of the present invention.

Figure 2 is a perspective view of the bottom of the present tape drive, with electronic components removed for clarity, and with a tape cartridge shown in position to be loaded into the tape drive.

Figure 3 is a schematic illustration of the electronic controls, magnetic head, and capstan drive of the present tape drive.

Figure 4 is a top plan view of a standard tape cartridge.

Figure 5 is a perspective view of the bottom of a cartridge loading apparatus, separated from the tape drive.

Figure 6 is a perspective view of an ejector.

Figure 7 is a partial bottom plan view of the tape drive shown in Figure 2, with the position of the latches and ejector when the tape cartridge is loaded shown in broken lines.

Figure 8 is a cross-sectional elevation of the tape drive in Figure 7 taken along line 8-8, showing the tape cartridge partially loaded into the tape drive.

Figure 9 is a cross-sectional elevation of the present tape drive showing the tape cartridge in a fully loaded position.

Figure 10 is a partial rear perspective view of the tape drive, with a partially loaded tape cartridge shown in broken lines.

Figure 11 is a partial perspective view of the tape cartridge and rollers as positioned when the cartridge is fully loaded.

Figure 12 is an elevation of the tape cartridge and a guide track, taken along line 12-12 in Figure 11.

Detailed Description of a Preferred Embodiment

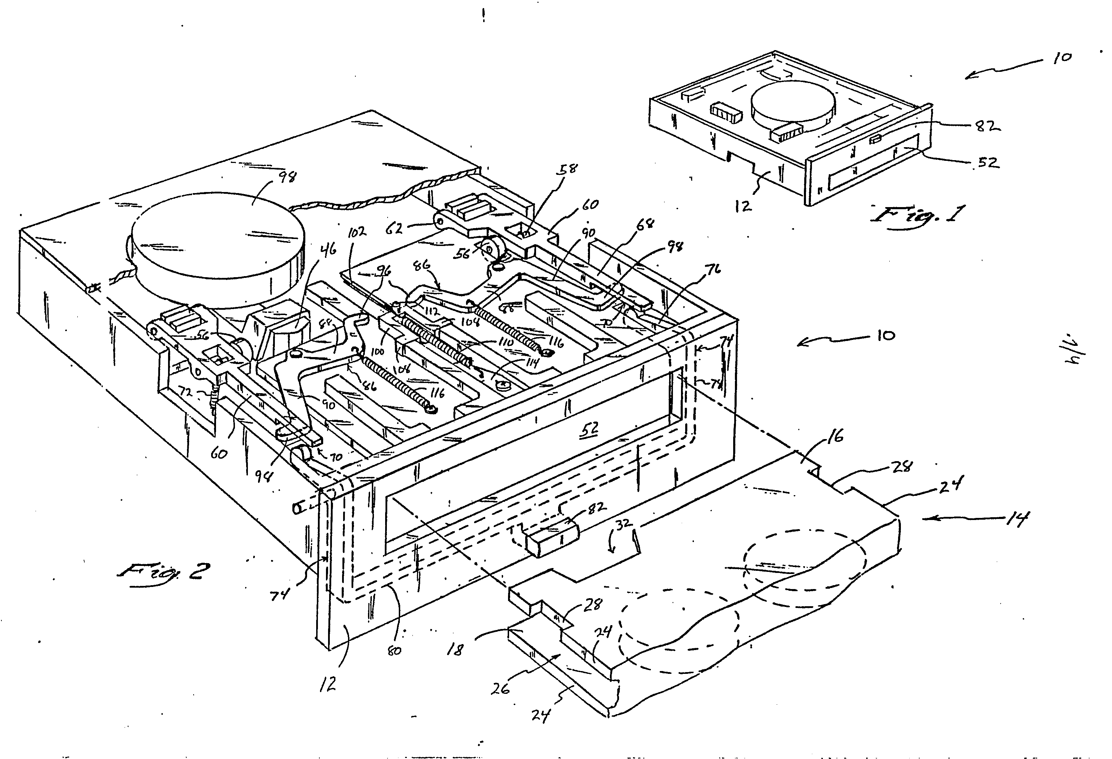

Referring to Figure 1, a streaming tape drive 10 is shown having an overall rectangular configuration. A housing 12 is provided on which a number of mechanical and electrical components are mounted. Preferably, the external dimensions of the tape drive 10 correspond to the 3-1/2 inch form factor for mechanical transport as set forth by ANSI. In particular, the tape drive 10 has a width of no more than 4.02 inches, a height of no more than 1.65 inches, and length or depth of no more than 5.77 inches.

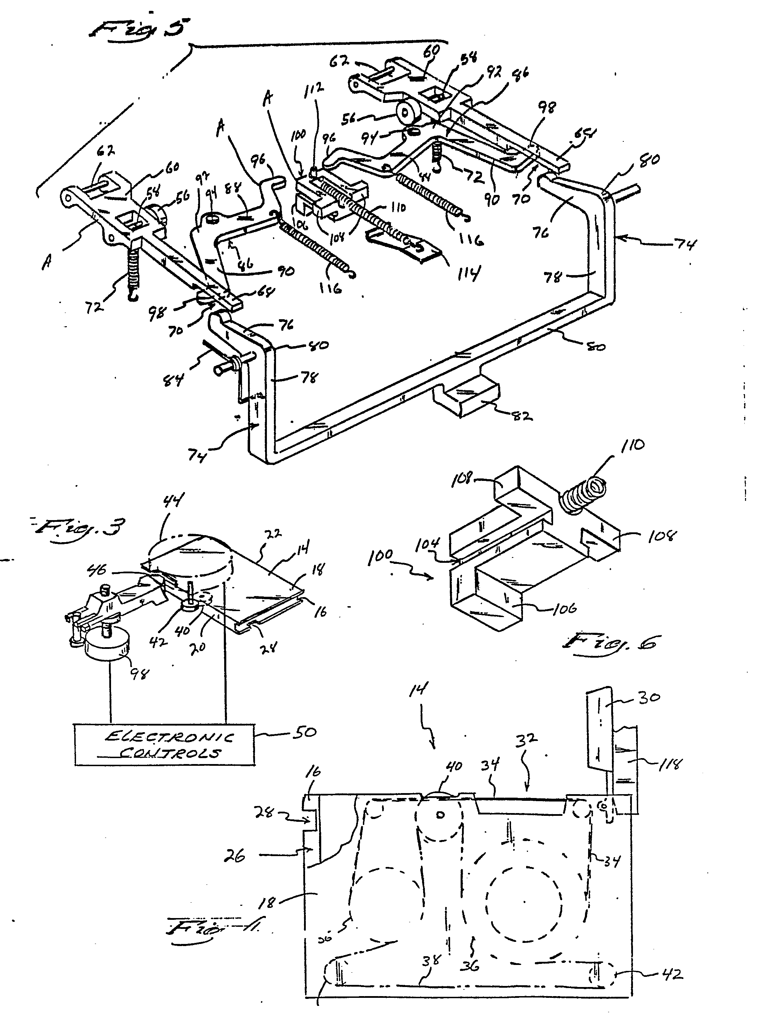

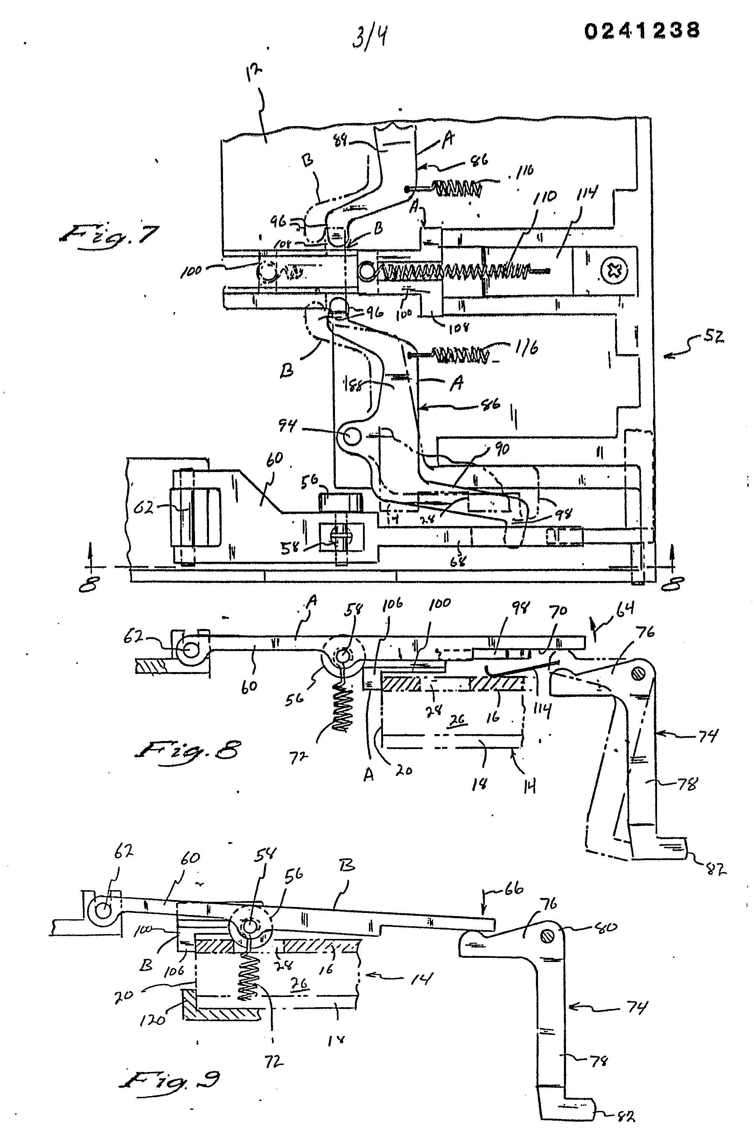

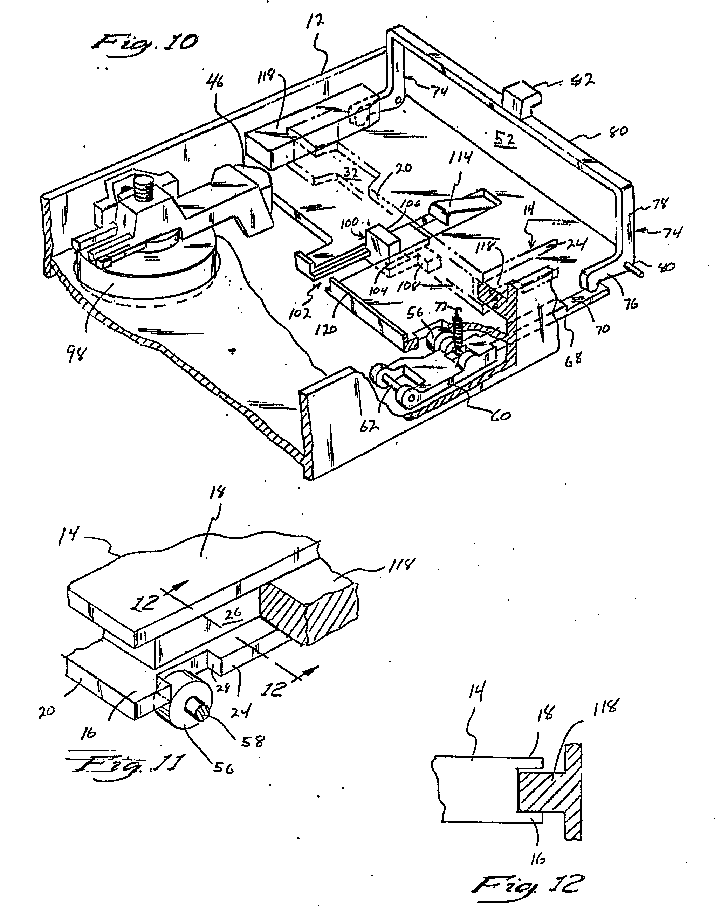

The tape drive 10 is designed for use with a conventional tape cartridge 14 of the type shown in Figure 4, such as the DC 2000 "mini data cartridge" manufactured by 3M, Data Recording Products Division, St. Paul, Minnesota. The cartridge 14 includes a substantially planar bottom plate 16, and a substantially planar top plate 18, which are substantially parallel to each other. The cartridge 14 has substantially parallel front and rear edges 20 and 22, and two substantially parallel side edges 24. The front edge 20 and rear edge 22 are longer than the side edges 24, thus defining and overall rectangular shape for the cartridge 14. In accordance with ANSI standards, the front and rear edges 20,22 of the cartridge 14 are approximately 3-3/16 inches long, and the side edges 24 are approximately 2-3/8 inches long.

The cartridge 14 include grooves 26, which are indented from the side edges 24 of the bottom plate 16 and top plate 18. A pair of rectangular notches 28 are cut out of each of the bottom plate side edges 24. The cartridge 14 includes a door 30 which is hinged to the front of the cartridge 14. The door 30 is biased to remain normally closed. When the door 30 is open, as shown in Figure 4, an access opening 32 through the cartridge 14 is exposed.

A length of 1/4 inch wide magnetic tape 34 is wound within the cartridge 14 on a pair of rotatable reels 36, which are mounted between the plates 16 and 18. The tape 34 is fed through the access opening 32. A drive belt 38 is wound around the reels 36, a capstan 40, and a set of rollers 42, which are also rotatably mounted between the plates 16 and 18. Rotation of the capstan 40 causes the belt 38 to turn the reels 36, and thus winds the tape 34 onto the reels 36.

Figure 3 schematically shows the operation of the tape drive 10 when a cartridge 14 is loaded therein. The capstan 40 is rotated by a capstan driver roller 42, which in turn is powered by a drive motor 44. The door 30 of the cartridge 14 is held open so that a magnetic read/write head 46 can engage the tape 34 through the access opening 34. A stepper motor 48 moves the head 46 laterally across the tape 34 so that multiple tracks may be recorded on the tape 34. A set of electronic controls 50 govern the operation of the drive motor 44 and the stepper motor 48.

Referring now to Figures 2 and 7, which show the bottom of the tape drive 10, the tape cartridge 14 is manually inserted, front edge 20 first, through a rectangular opening 52 in the housing 12. The opening 52 is sufficiently wide to provide clearance between the side edges 24 and the cartridge 14 and the housing 12. To lock the cartridge 14 in a "fully loaded" or stationary position within the housing 12 such that the head 46 engages the tape 34 and the capstan roller 42 engages the capstan 40, a cartridge loading mechanism 54 constructed in accordance with this invention is provided. As shown in Figure 5, the loading mechanism 54 is formed from a plurality of interacting components. A description of each of these components follows.

A pair of round rollers 56 are rotatably mounted on axles 58. The axles 58, and thus the axis of rotation of the rollers 56, are parallel to the cartridge bottom plate 16 when the cartridge 14 is loaded in the tape drive 10, as in Figure 9. The axis of rotation of the rollers 56 is also normal to the side edges 24 of the cartridge 14. As is best shown in Figures 9 and 11, the rollers 56 nest within the notches 28 on either side of the bottom plate 16 to lock the cartridge 14 in the fully loaded position.

One roller 56 and axle 58 is mounted on each of two roller carrier levers 60. The carrier levers 60 are elongated and run substantially parallel to the side edges 24 of the loaded cartridge 14. One end of each lever 60 is pivotably secured to the housing 12 by a pin 62. The axis of rotation of the levers 60 is parallel to the axis of rotation of the rollers 56, and also parallel to the bottom plate 16 of the cartridge 14. The carrier levers 60 are rotatable either away from the cartridge bottom plate 16, as shown by arrow 64 in Figure 8, or in the opposite direction, toward the bottom plate 16, as shown by arrow 66 in Figure 9. When the levers 60 are rotated toward the cartridge bottom plate 16, the rollers 56 are brought into engagement with the cartridge 14. Likewise, the rollers 56 and cartridge 14 become disengaged when the carriers 60 are rotated away from the cartridge 14. The "unloaded" position, or the position of the carrier levers 60 when the rollers are disengaged, is labeled position A. The "loaded" position, when the rollers engage the cartridge, is labeled position B.

The other end of each carrier lever 60 terminates in an elongated neck portion 68. A recess 70 is provided on the side of the neck portion 68 which faces toward the cartridge 14. The levers 60 are biased in the direction of rotation toward the bottom plate 16 by coil springs 72 which are attached to the axles 58 at one end and to the housing 12 at the other end.

As discussed above, to disengage the rollers 56 from the cartridge 14, the carrier levers 60 are rotated away from the cartridge 14, in the direction of arrow 64, to position A. A pair of L-shaped cranks 74 are provided for this purpose. Each crank 74 has two arms 76 and 78. The arms 76 and 78 are substantially normal to each other and are joined at their ends to form an apex 80. The cranks 74 are pivotably secured to the housing 12 at a point proximate the apex 80.

Referring to Figure 8, as the cranks 74 are pivoted to the position shown in broken lines, the end of the arm 76 contacts the recess 70 in the carrier lever neck portion 68 and lifts the carrier levers 60. To ensure that the cranks 74 move in unison, the other end of each arm 78 is joined by a yoke 80.

An ejector button 82 protrudes outwardly from the center of the yoke 80 and through the housing 12, as shown in Figures 1 and 2. When ejector button 82 is depressed, the cranks 74 pivot so as to rotate the carrier levers 60 to the unloaded position A in which the rollers 56 are disengaged from the cartridge 14. Referring to Figure 5, cranks 74 are biased by a spring 84.

The spring 84 causes the cranks 74 to pivot to the position shown in solid lines in Figures 8 and 9, wherein the arm 76 does not cause displacement of the carrier levers 60. Although not shown, the carrier levers 60 may be attached so as to move in unison. Thus, only a single crank 74 would be necessary to disengage both rollers 56 from the cartridge 14.

To overcome the biasing force of coil springs 72 and maintain the carrier levers 60 in position A so that the rollers 56 remain disengaged from the cartridge 14 when the cartridge is being loaded and unloaded, a pair of latches 86 are provided to support the carrier levers 60. As shown in Figures 2, 5, and 7, each latch has two arms 88 and 90, which are substantially normal to each other and having an apex 92 where the two arms join. The latches 86 are pivotably secured to the housing 12 by pins 94 which are located proximate the apex 92, and which allow each latch 86 to pivot about an axis which is substantially normal to the cartridge bottom plate 16.

The arms 88 terminate in a rounded finger 96. The arms 90 also terminate in a rounded finger 98 which supportively engages the recess 70 in the carrier levers 60 when the latch 86 is in a position A. When the latch 86 is supporting the carrier lever 60, the lever 60 is held in its unloaded position A, far enough away from the cartridge bottom plate 16 so that the rollers 56 do not engage the cartridge 14. While there may be some incidental contact between the cartridge bottom plate 16 and the rollers 56, it is to be understood that the rollers 56 will not "operatively" engage the cartridge 14 in the sense of providing significant resistance to movement of the cartridge 14.

The latches 86 are pivotable from a position of supportive engagement, or position A, as described above, to a withdrawn position, or position B, as shown in broken lines in Figure 7. When in the withdrawn position B, the latches 86 do not prevent rotation of the carrier levers 60 toward the cartridge 14. The latches 86 are caused to pivot into the withdrawn position B by means of an ejector 100. The ejector 100 is slidable within a slot 102 in the housing 12. The slot 102 is substantially parallel to the side edges 24 of the cartridge 14, and thus parallel to the direction of motion of the cartridge 14 during loading and unloading. The edges of the slot 102 mate with grooves 104 on either side of the ejector 100.

As best shown in Figure 5 and 6, the ejector 100 includes a front shoulder 106 which is engaged by the front edge 20 of the bottom plate 16, and a pair of side shoulders 108 which engage the latches 86. Referring now to Figure 7, when the cartridge 14 is unloaded, the ejector 100 is in an unloaded position A, shown in solid lines. As the cartridge 14 is loaded, the cartridge 14 pushes against the front shoulder 106 and causes the ejector 100 to slide along the slot 102 to a loaded position B, shown in broken lines. The loaded position B corresponds to the position of the ejector 100 when the cartridge 14 is fully loaded. As the ejector 100 approaches the loaded position B, the ejector side shoulders 108 engage the fingers 96 on the latches 86 and cause the latches 86 to pivot to the withdrawn position B.

The ejector 100 is biased to return to the unloaded position A by a coil spring 110. The coil spring 110 is attached to a pin 112 on the ejector 100 at one end and to a cartridge positioning spring 114 at the other end. The latches 86 are each biased by a coil spring 116 attached to the arm 88 at one end and to the housing 12 at the other end. The springs 116 return the latches 86 to the position of supportive engagement, position A. Thus, as the cartridge 14 is unloaded and the ejector 100 returns to its unloaded position A, the latches 86 will pivot to support the carrier levers 60.

Turning now to the operation of the cartridge loading mechanism 54, before the cartridge 14 is loaded, the ejector 100 is in the unloaded position A. The carrier levers 60 are held in the unloaded position A by the latches 86, which are also in position A. The front edge 20 of the cartridge 14 is manually inserted through the opening 52 in the tape drive housing 12, as shown in Figure 2. Referring now to Figure 10, once inside the tape drive 10, the grooves 26 in the cartridge 14 will slide along a pair of guide tracks 118 which protrude inwardly from either side of the housing 12. The guide tracks 118 will contact the door 30 and cause the door 30 to swing open, as shown in Figure 4.

As the cartridge 14 advances into the housing 12, the cartridge front edge 20 contacts the ejector front shoulder 106 and causes the ejector 100 to slide along the slot 102, toward the loaded position B of the ejector 100. No resistance is encountered from the rollers 56 as the cartridge 14 advances, since the carrier levers 60 are held in the unloaded position A such that the rollers 56 will not engage the cartridge 14.

As best shown in Figure 7, when the ejector 100 reaches the loaded position B, the side shoulders 108 will engage the fingers 96 of the latches 86 and pivot the latches 86 into the withdrawn position B so that the latches 86 no longer support the carrier levers 60. The coil spring 72 will then quickly pull the carrier levers 60 toward the cartridge 14, in the direction of arrow 66. As the carrier levers 60 reach their loaded position B, the rollers 56 snap into engagement with the notches 28 in the cartridge bottom plate 16, locking the cartridge 14 in a fully loaded position, as shown in Figure 9. As the rollers 56 slide into the notches 28, the cartridge 14 is pushed further into the housing 12 by coaction between the roller 56 and leading edge of the notch 28 so that the cartridge front end 20 positively abuts a lip 120 on the housing 12. Simultaneously, the rollers 56 also force the cartridge 14 upwardly. Note that the top and bottom of the cartridge loading apparatus 54 are inverted in Figure 9. Thus, arrow 66 points "upwardly" in the sense that the term is used herein.

As shown in Figure 12, the upward motion of the cartridge 14 causes the bottom plate 16 to be pressed against the track 18. The cartridge 14 is also pressed upwardly by the cartridge positioning spring 114. Advantageously, the exterior surfaces of the rollers 56 are lubricated to minimize friction as the rollers 56 nest in the notches 28 and push the cartridge 14 into the fully loaded position.

To unload the cartridge 14, the eject button 82 is depressed. As best shown in Figure 8, this causes the cranks 74 to push the carrier levers 60 away from the cartridge 14, in the direction of arrow 64, and into the unloaded position A, thus disengaging the rollers 56 from the cartridge 14. Upon disengagement of the rollers 56, the cartridge 14 is no longer prevented from sliding along the tracks 118. The ejector 100, which is biased by the spring 110 to return to its unloaded position A, will thus pull the cartridge 14 in an unloading direction, that is, rear edge 22 first. As the ejector 100 slides towards its unloaded position A, the latches 86 are no longer engaged by the side shoulders 108 of the ejector 100. As a result, the springs 116 on the latches 86 cause the latches 86 to pivot to position A, in which the fingers 98 supportively engage the carrier levers 60, so as to maintain the levers 60 in position A and the rollers 56 disengaged from the cartridge 14.

The above sequence of events during unloading occurs virtually simultaneously, so that as the cartridge 14 slides out of the housing 12, resistance from the rollers 56 is not encountered, thus reducing the amount of manual force to be applied to the eject button 82.

The manual force applied to the eject button 82 is also minimized by the leverage applied to the carrier lever 60 in disengaging the rollers 56. In particular, the cranks 74 engage the levers 60 at a point which is farther from the rotational axis of the levers 60 than are the rollers 56 and springs 72. Therefore, the force required to disengage the rollers 56 by pivoting the carrier levers 60 is less than the force which the rollers 56 apply to lock the cartridge 14 in the fully loaded position.

-14-

Since the present cartridge loading apparatus 54 maintains the rollers 56 disengaged during loading and unloading, the manual force necessary for loading and unloading can be as low as 3 pounds. This can be achieved even while using rollers 56 with diameters as small as 0.280 inches. The use of small diameter rollers 56 advantageously facilitates compliance with the 3-1/2" form factor.

WHAT IS CLAIMED IS:

1. A tape drive (10) for a tape cartridge (14) having front (20), rear (22) and side edges (24), said drive (10) having a housing (12) and an opening (52) in the housing (12) through which the cartridge (14) is loaded, said drive (10) including a cartridge loading apparatus (54) which is characterized by comprising:

means (56) for securing the cartridge (14) in a fixed, fully loaded position relative to said housing (12) by engaging said cartridge (14); and

engagement means (60, 74, 86) for selectively engaging and disengaging said securing means (56) so that said cartridge (14) can be loaded and unloaded without having to overcome resistance from the securing means (56).

2. A tape drive as defined by Claim 1, characterized in that said securing means comprises a pair of rollers (56) which are rotatably mounted on said housing (12), each of said rollers (56) positioned to engage said cartridge (14).

3. A tape drive as defined by Claim 1, characterized in that said engagement means comprises a pair of roller carrier levers (60), one of said rollers (56) being mounted on each of said carrier levers (60), each of said carrier levers (60) being pivotably secured to said housing (12) so as to rotate about an axis (62) which is parallel to the rotational axis of the respective roller (56) mounted thereon, rotation of said carrier levers (60) causing said rollers (56) to move in a direction either toward or away from said cartridge (14), causing said rollers (56) to either engage or disengage said cartridge (14).

4. A tape drive as defined by Claim 3, characterized by means (72) for biasing said carrier levers (60) to rotate in the direction which brings said rollers (56) into engagement with said cartridge (14).

5. A tape drive as defined by Claim 4, characterized in that said engagement means further comprises a crank (74) which is pivotably secured to said housing (12) and which pivots into contact with one of said roller carrier levers (60), causing said carrier lever (60) to rotate in said direction which disengages the roller (56) from said cartridge (14), and means (74, 80) for coordinating the motion of both of said carrier levers (60).

6. A tape drive as defined by Claim 5, characterized in that said crank (74) is biased to pivot in a direction away from contact with said carrier lever (60).

7. A tape drive as defined by Claims 5 or 6, characterized in that said coordinating means comprises a second crank (74) pivotably secured to said housing (12) for pivoting into contact with the other carrier lever (60) to cause said other carrier lever (60) to rotate in a direction to disengage the roller (56) mounted thereon from said cartridge (14), said cranks (74) attached by a yoke (80) so that said cranks (74) move in unison.

8. A tape drive as defined by Claims 5-7, characterized in that said crank (74) is substantially L-shaped and is pivotably secured to the housing (12) proximate the apex (80) of the crank (74).

9. A tape drive as defined by Claim 5-8, characterized in that the point (70) along the carrier lever (60) which is contacted by said crank (74) is spaced farther from the axis of rotation (62) of said carrier lever (60) than is the roller (56) mounted on said carrier lever (60), so that the force required to disengage said roller (56) from the cartridge (14) is less than the force which the roller (56) applies to lock the cartridge (14) in a fully loaded position.

10. A tape drive as defined by Claims 5-9, characterized in that said engagement means further comprises means (86) for supporting said carrier levers (60) in a position so that said rollers (56) are disengaged from said cartridge (14).

11. A tape drive as defined by Claim 10, characterized by means (100) for actuating said support means (86) during unloading of said cartridge (14), and for withdrawing said support means (86) upon fully loading said cartridge (14) so that said rollers (56) resist movement of said cartridge (14) only when said cartridge (14) is fully loaded into said tape drive (10).

12. A tape drive as defined by Claim 11, characterized in that said support means comprises a latch (86) which engages one of said carrier levers (60) to prevent rotation of said carrier lever (60) toward the cartridge (14), said latch (86) being pivotably secured to said housing (12) to move in and out of supportive engagement with said carrier (60), said actuating means (100) characterized by:

means (116) for biasing said latch (86) to pivot into supportive engagement with said carrier lever (60);

an ejector (100) mounted on said housing (12) and movable from a first position to a second position, said cartridge (14) causing said ejector (100) to move from said first position to said second position as said cartridge (14) is loaded into said drive (10), when in said second position said ejector (100) engaging said latch (86) and causing said latch (86) to pivot and become withdrawn from supportive engagement of said carrier (60), allowing said carrier (60) to rotate towards said cartridge (14) and the roller (56) thereon to engage said cartridge (14), locking said cartridge (14) in a fully loaded position; and

means (110) for biasing said ejector (100) to return to said first position so that upon disengagement of said roller (56) from said cartridge (14), said ejector (100) forces said cartridge (14) in an unloading direction, said latch biasing means (116) causing said latch (86) to pivot into supportive engagement of said carrier (60) upon return of said ejector (100) to said first position.

13. A tape drive as defined by Claim 12, characterized in that said ejector (100) is slidable within a slot (102) in said housing (12), said slot (102) being oriented substantially parallel to the direction of motion of said cartridge (14) during loading and unloading.

14. A tape drive as defined by Claims 1-13, characterized in that said cartridge (14) includes a cut out notch (28) along each side edge (24), said securing means (56) engaging said notches (28) to lock said cartridge (14) in a fully loaded position.

15. A tape drive as defined by Claim 12, characterized in that said latch (86) has first (90) and second (88) arms which are substantially normal to each other and are joined together at their ends to form an apex (92), said latch (86) pivoting about a point proximate said apex (92), said first arm (90) having a finger (98) at its other end which is adapted to engage said carrier (60), said latch biasing means (116) attached to said second arm (88) proximate its other end, said second arm (88) terminating in a finger (96) which is adapted to engage said ejector (100).

16. A tape drive as defined by Claims 1-15, wherein the exterior dimensions of said housing (12) are no greater than 4.02 inches wide, 1.65 inches high and 5.77 inches long or deep.

10

82

52

12

Fig. 1

58

60

62

102

46

56

96

86

90

68

98

76

74

94

112

104

110

116

114

100

106

116

66

90

70

52

72

60

94

74

16

28

24

14

82

32

80

18

28

24

26

12

Fig. 2

0241238

1/4

0241238

Fig. 5

Fig. 3

Fig. 6

ELECTRONIC CONTROLS

Fig. 1

*Fig. 7*

*Fig. 8*

*Fig. 9*

0241238

4/4

Fig. 10

Fig. 11

Fig. 12